# EUROPEAN PATENT SPECIFICATION

(11) **EP 0 700 633 B1**
(45) Date of publication and mention of the grant of the patent: **19.11.1997**
(21) Application number: 95112333.0
(22) Date of filing: 04.08.1995
(51) Int. Cl.: A01G 27/00

(54) **Device for watering flower pots**
Vorrichtung zum Bewässern von Blumentöpfen
Dispositif pour arroser des pots de fleurs

(30) Priority: 08.08.1994 JP 185967/94; 27.01.1995 JP 11636/95; 27.01.1995 JP 11667/95
(43) Date of publication of application: 13.03.1996
(73) Proprietor: Kabushiki Kaisha Yamazen Kanagata, Higashiosaka-shi, Osaka (JP)
(72) Inventor: Yamashita, Yoshiyuki, c/o K. K. Yamazen Kanagata, Higashiosaka-shi, Osaka (JP)
(74) Representative: Glawe, Delfs, Moll & Partner

(56) References cited:
- EP-A- 0 394 199
- EP-A- 0 622 016
- WO-A-87/06095
- FR-A- 2 156 477
- GB-A- 2 045 043
- US-A- 3 739 523
- US-A- 4 157 770

## Description

This invention relates to a watering device for watering flowerpots, bonsai, planters, etc.

Plants in pots are usually watered manually by direct overhead sprinkling using watering pots. But if the grower or growers are away for a long time, no one can water the plants, so that the soil tends to dry up. Also, if excessive water is supplied at a time, the soil rich in nutrients may flow out, or the roots of the plants may rot.

A watering device according to the precharacterizing part of the first claim is known from FR-A-21 56 477. This document discloses a watering device comprising a pivotable container, which is fed with water from a storage tank by a regulatable drop-by-drop dispenser. When a predetermined amount of water has been collected, the pivotable container pivots around a horizontal axis, emptying the water in a water supply tank for further distribution.

An object of this invention is to provide a watering device for flowerpots which makes it unnecessary for humans to determine watering intervals and amount.

According to this invention, there is provided a watering device for watering a flowerpot, as defined in claim 1.

The watering device according to the present invention comprises a water supply pipe having the shape of an inverted U and a water absorptive member inserted therein with one end thereof immersed in water in the water storage tank and the other end disposed over the water storage container.

The watering device further comprises a float provided in the water storage tank and adapted to move up and down according to the level of water in the water storage tank, the inverted U-shaped pipe having one end thereof connected to the float. Also, the inverted U-shaped pipe may be vertically slidably provided relative to the float.

This device may have a variable throttle means attached to water supply pipe.

Also, the watering device may further comprise a tray provided over the water supply tank for collecting rainwater, the tray having a hole through which rainwater collected in the tray can drip into the underlying water storage tank.

Water collected in the water storage tank is fed into the water storage container through the water supply pipe. When a predetermined amount water is stored in the container, the center of gravity of the container will move to one side, so that the container pivots, emptying the water in the container into the water supply tank. The water emptied into the water supply tank is then absorbed into the water absorptive member in the tube, and supplied into the soil through the water supply holes formed in the tube.

When the water in the water supply tank runs out, the supply of water into the soil stops. When a predetermined amount of water is stored in the water storage container next time, the container will pivot again, thus emptying water into the water supply tank. Water is now supplied again into the soil in the pot. This operation is repeated as far as there is water in the water storage tank.

Other features and objects of the present invention will become apparent from the following description made with reference to the accompanying drawings, in which:
Fig. 1 is a front view, partially in vertical section, of a first embodiment;
Fig. 2 is a plan view of the same;
Fig. 3 is a perspective view of the water supply tank;
Fig. 4 is a front view, partially in vertical section, of a second embodiment;
Fig. 5 is a plan view of the same;
Fig. 6 is a front view, partially in vertical section, of a third embodiment;
Fig. 7 is a front view, partially in vertical section, of a fourth embodiment;
Fig. 8 is a perspective view of the water supply pipe having the variable throttle means attached thereto; and
Fig. 9 is a perspective view of a different type of water feed pipe.

Now embodiments are described with reference to the drawings. Functionally identical elements in the respective embodiments are denoted by the same numerals.

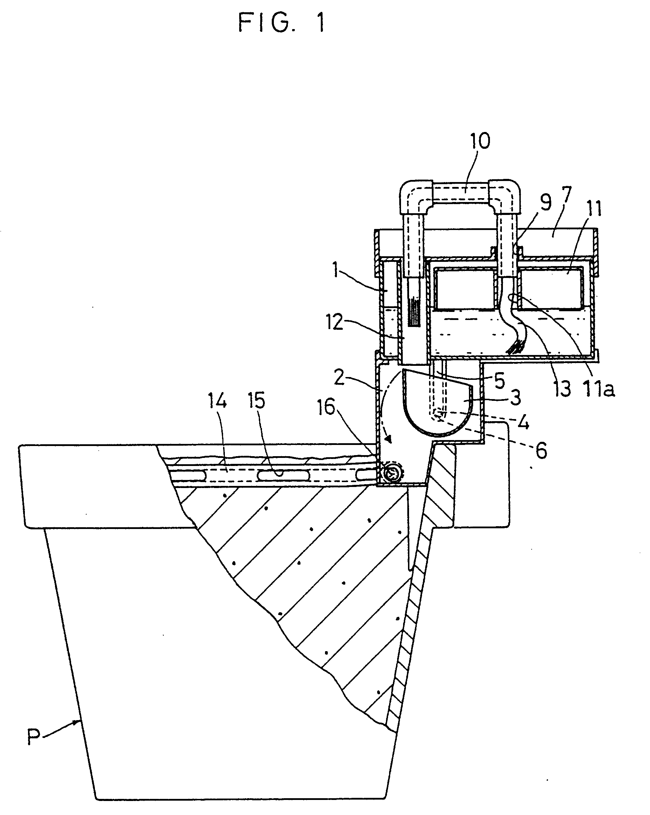

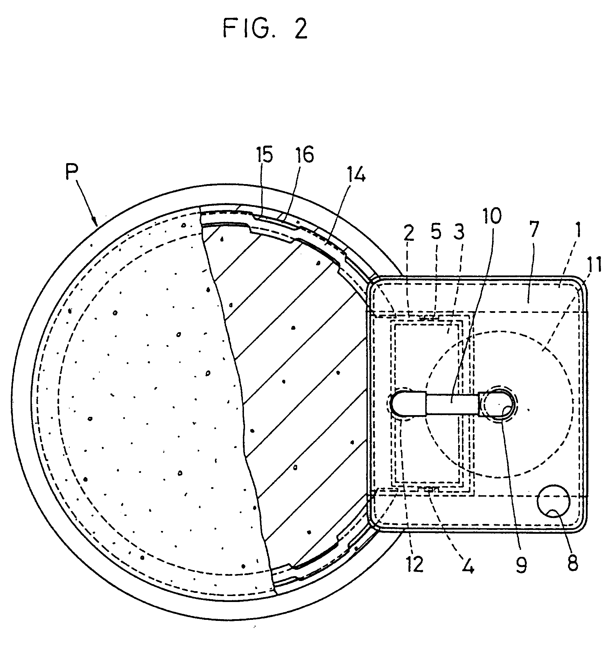

Figs. 1-3 show the first embodiment. As shown, an upper water storage tank 1 and a lower water supply tank 2 are mounted on the top edge of the peripheral wall of a flowerpot P. In the water supply tank 2 is provided a temporary water storage container 3 having a top opening and having such a shape that when a predetermined amount of water collects in the container, its center of gravity moves to one side. It is provided with shafts 4 protruding from both sides thereof along its center of gravity when the container 3 is empty. A vertical groove 5 is formed in the inner surface of either side wall of the water supply tank 2. The shafts 4 are supported on support pieces 6 provided at the bottoms of the respective grooves 5. The container 3 is thus pivotably supported on the support pieces 6 through the shafts 4.

A rainwater-collecting tray 7 covers the top of the water storage tank 1. A hole 8 is formed in the bottom of the tray 7 through which rainwater collected in the tray 7 drips into the tank 1.

The tray 7 is also formed with an opening 9 through which is inserted one end of an inverted U-shaped water supply pipe 10. A cylindrical float 11 is provided in the water storage tank 1. The one end of the water supply pipe 10 protruding into the water storage tank 1 is slidably press-fitted into a guide hole 11a formed in the center of the float 11. Its other end is slidably inserted in a pipe member 12 vertically extending through the water storage tank 1. The bottom end of the pipe member 12 protrudes into the tank 2 and opens over the container 3. A water absorptive member 13 such as a porous cotton braid or a sponge member is inserted through the pipe 10 with one end thereof protruding downwardly from the float 11 and the other end disposed in the pipe member 12.

A tube 14 laid along the inner surface of the flowerpot P has both ends thereof connected to the bottom of the water supply tank 2. The tube 14 has a plurality of holes 15. A water absorptive member 16 such as a porous cotton braid or a sponge member is inserted in the tube 14 with both ends thereof disposed in the water supply tank 2.

By filling the water storage tank 1 with water, one end of the water absorptive member 13 is wetted with water, so that the water in the tank 1 is sucked up by the water absorptive member 13. The other end of the member 13 is disposed over the temporary water storage container 3, so that the water sucked up by the member 13 drips into the container 3. When a predetermined amount of water has collected in the container, its center of gravity will move to one side, so that the container 3 pivots, emptying the water in the container 3 into the water supply tank 2. The water in it is sucked by the water absorptive member 16 and supplied into the soil through the holes 15 in the tube 14.

When the water in the water supply tank 2 runs out, the supply of water is stopped until the container 3 pivots and the water therein is emptied into the tank 2 next time. This operation is repeated until the water storage tank 1 becomes empty.

The float 11 moves up and down according to the level of water in the water storage tank 1, so that the portion of the water absorbent member 13 immersed in the water is kept at a constant length. Thus, it is possible to supply water into the container 3 at a constant rate.

By vertically sliding the one end of the water supply pipe 10 in the guide hole 11a, water lifting capacity of the water absorbent member 13 will change, so that it is possible to control the per-unit-time water supply into the container 3.

Rainwater collected in the tray 7 drips into the water storage tank 1 through the hole 8, and stored in the tank 1.

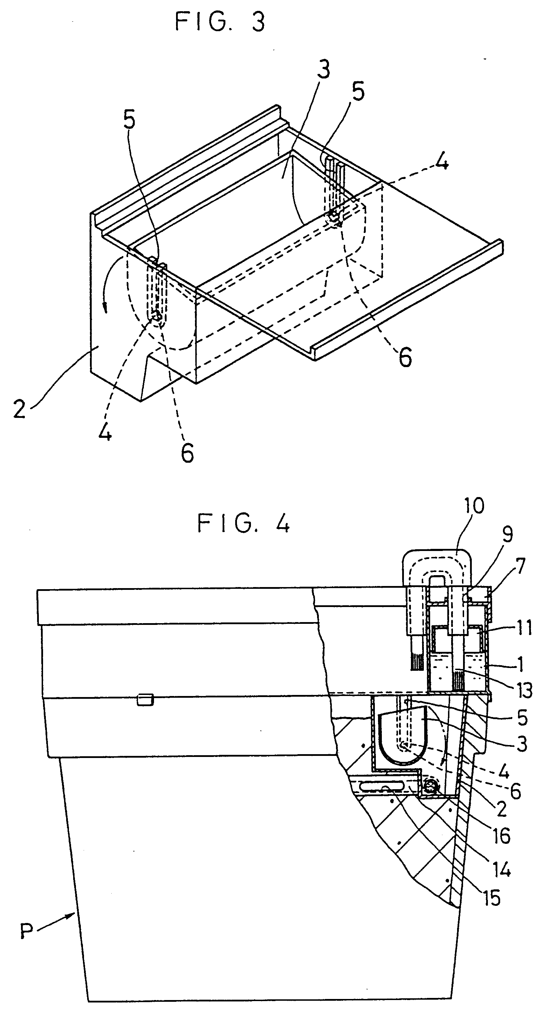

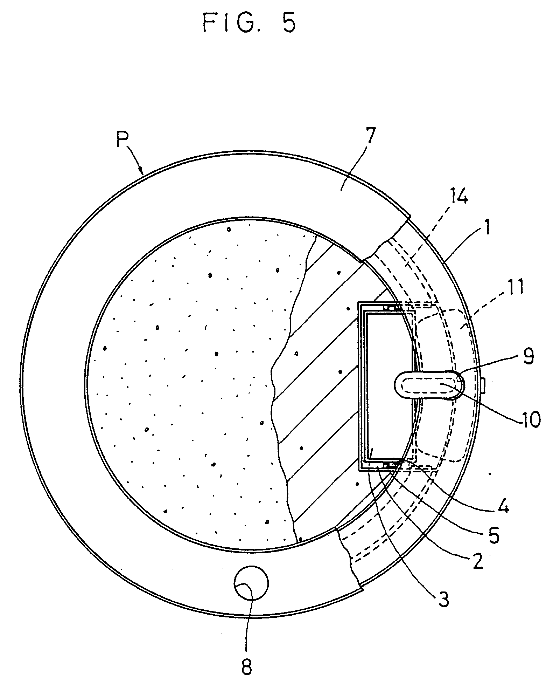

In the second embodiment shown in Figs. 4 and 5, a water storage tank 1 is provided to extend the entire circumference of the flowerpot P.

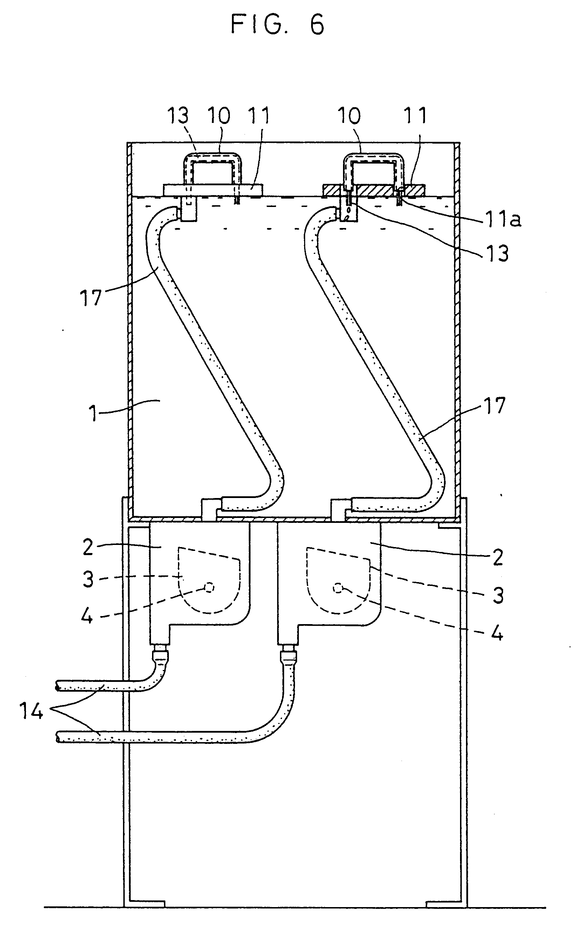

In the third embodiment shown in Fig. 6, flexible water supply pipes 17 have their one end connected to the bottom of the float 11 and their other end disposed over water storage containers 3. Water sucked up by water absorptive members 13 is thus supplied through the water supply pipes 17 to the water storage containers 3.

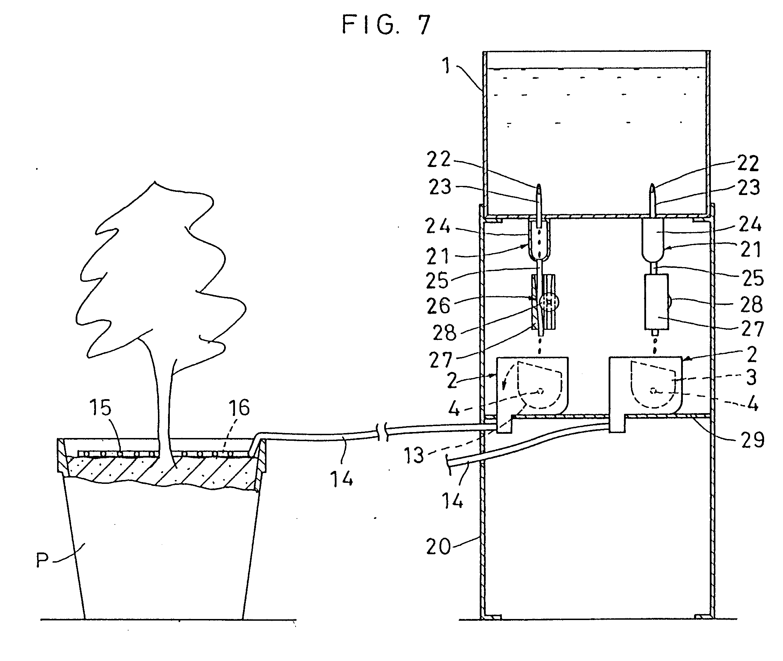

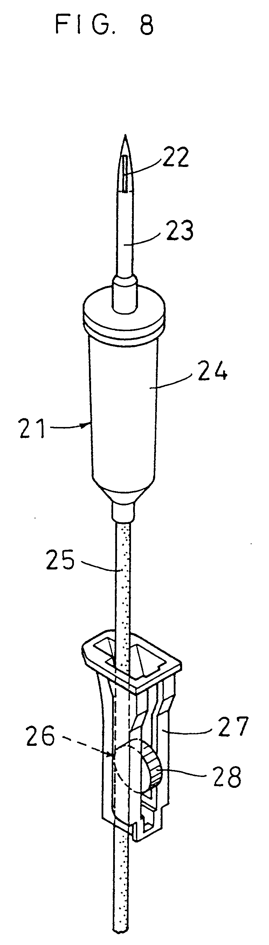

In the fourth embodiment shown in Figs. 7 and 8, the water storage tank 1 is placed on a support 20 provided at the side of the flowerpot P. Water supply pipes 21 have their top ends connected to the bottom of the water storage tank 1. Each water supply pipe 21 comprises a needle 23 inserted in the water storage tank 1 and having a top opening 22, an intermediate water container 24 connected to the bottom of the needle 23, a resilient narrow pipe 25 having its top connected to the container 24, and a variable throttle means 26 attached to the narrow pipe 25.

The variable throttle means 26 comprises a case 27 through which the narrow pipe 25 passes, and a throttle roller 28 adapted to move up and down while rolling. By sliding the roller 28 downward, the narrow pipe 25 is pressed and flattened between the roller 28 and the side wall of the case 27, so that its sectional area is reduced.

The support 20 carries a shelf plate 29 on which are mounted water supply tanks 2. The narrow pipes have their bottom openings disposed over the respective water storage containers 3 in the tanks 2.

In this arrangement, water collected in the water storage tank 1 flows into the respective needles 23 through their openings and drips through their bottom openings into the intermediate containers 24. The water in the containers 24 then flows through the narrow pipes 25 having the variable throttle means 26 and drips into the water storage containers 3.

By vertically sliding the throttle roller 28 of each variable throttle means 26, it is possible to change the amount of water dripping into the water storage containers 3 per unit time.

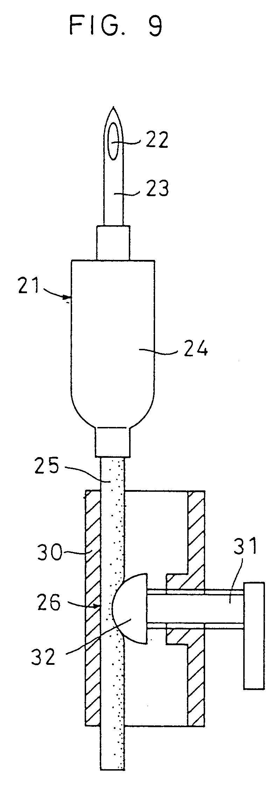

Fig. 9 shows a different type of variable throttle means 26. It comprises a case 30 through which the narrow pipe 25 passes, a threaded shaft 31 threaded into the case 30, and a presser member 32 provided at the leading end of the threaded shaft 31. By sandwiching the narrow pipe 25 between the presser member 32 and the side wall of the case 30, the narrow pipe 25 can be throttled.

According to this invention, as long as there is water in the water storage tank, it is possible to supply water into the flowerpot at a constant rate, thereby preventing the soil in the pot from drying. Also, it is possible to prevent the roots of plants from rotting due to excessive supply of water.

Thus, the plant grower does not have to worry about watering intervals and amounts. Still, it is possible to grow plants under optimal conditions.

This device incurs no running cost, because it consumes neither fuels nor electric energies.

## Claims

1. A watering device for watering a flowerpot, comprising a water storage tank (1), a water supply tank (2), a water storage container (3) pivotally mounted in said water supply tank (2), a water supply pipe (10) through which water in said water storage tank (1) is supplied into said water storage container (3), said water storage container (3) having such a shape that when the amount of water therein exceeds a predetermined level, its center of gravity moves to one side, whereby said water storage container (3) pivots, **characterized** in that
said water supply pipe (10) has the shape of an inverted U, and a water absorptive member (13) is inserted therein with one end thereof being immersed in water in said water storage tank (1) to suck water therefrom and the other end being disposed over or connected (17)to said water storage container (3) to supply water thereto,
said inverted U-shaped water supply pipe (10) is connected to a float (11) provided in said water storage tank (1) and adapted to move up and down according to the level of water in said water storage tank (1),
and said flowerpot (P) is provided with a tube (14) having at least one end thereof connected to a lower portion of said water supply tank (2),
said tube (14) being provided with a water absorptive member (16) and a plurality of water supply holes (15).

2. A watering device for watering a flowerpot as claimed in claim 1, wherein said inverted U-shaped water supply pipe (10) is vertically slidable relative to said float (11).

3. A watering device for watering a flowerpot as claimed in claim 1 or claim 2 further comprising a tray (7) provided over said water supply tank (2) for collecting rain-water, said tray (7) having a hole (8) through which rain-water collected in said tray (7) drips into said water storage tank (1).

4. A watering device for watering a flowerpot as claimed in one of the preceding claims, wherein said water supply pipe (10) is provided with variable throttle means (26) for regulating the water flow passing through said water supply pipe (10).

## Patentansprüche

1. Bewässerungsvorrichtung zum Bewässern eines Blumentopfes mit einem Wasservorratstank (1), einem Wasserzufuhrtank (2), einem Wasservorratsbehälter (3), der kippbar in dem Wasserzufuhrtank (2) gelagert ist, einem Wasserzufuhrrohr (10), durch das Wasser in dem Wasservorratstank (1) in den Wasservorratsbehälter (3) zugeführt wird, wobei der Wasservorratsbehälter (3) eine solche Form hat, daß wenn die Wassermenge darin ein vorgegebenes Niveau überschreitet, sein Schwerpunkt sich zu einer Seite bewegt, wodurch der Wasservorratsbehälter (3) kippt,
dadurch **gekennzeichnet,** daß
das Wasserzufuhrrohr (10) die Form eines umgekehrten U hat und darin ein wasserabsorbierendes Element (13) eingesetzt ist, dessen eines Ende in das Wasser in dem Wasservorratstank (1) eintaucht, um Wasser daraus anzusaugen, und dessen anderes Ende über dem Wasservorratsbehälter (3) angeordnet oder an diesen angeschlossen (17) ist, um diesem Wasser zuzuführen,
daß das umgekehrt U-förmige Wasserzuführrohr (10) mit einem in dem Wasservorratstank (1) vorgesehenen Schwimmer (11) verbunden ist und sich entsprechend dem Wasserpegel in dem Wasservorratstank (1) auf und ab bewegen kann,
und daß der Blumentopf (P) mit einem Rohr (14) versehen ist, das mit mindestens einem seiner Enden an einen unteren Bereich des Wasserzuführtanks (2) angeschlossen ist,
wobei das Rohr (14) mit einem wasserabsorbierenden Element (16) und einer Anzahl von Wasserzuführlöchern (15) versehen ist.

2. Bewässerungsvorrichtung zum Bewässern eines Blumentopfs nach Anspruch 1,
bei der das umgekehrt U-förmige Wasserzuführrohr (10) relativ zu dem Schwimmer (11) vertikal verschiebbar ist.

3. Bewässerungsvorrichtung zum Bewässern eines Blumentopfs nach Anspruch 1 oder 2,
die ferner eine über dem Wasserzuführtank (2) angeordnete Wanne (3) zum Auffangen von Regenwasser aufweist, wobei die Wanne (7) ein Loch (8) hat, durch das in der Wanne (7) gesammeltes Regenwasser in den Wasservorratstank (1) tropft.

4. Bewässerungsvorrichtung zum Bewässern eines Blumentopfs nach einem der vorangehenden Ansprüche,
bei dem das Wasserzuführrohr (10) mit einer einstellbaren Drosseleinrichtung (26) versehen ist zum Regulieren der durch das Wasserzuführrohr (10) fließenden Wasserströmung.

## Revendications

1. Dispositif d'arrosage pour l'arrosage d'un pot de fleurs, comprenant un réservoir de stockage d'eau (1), un réservoir d'alimentation en eau (2), un récipient de stockage d'eau (3) monté pivotant dans ledit réservoir d'alimentation en eau (2) , une tubulure d'alimentation d'eau (10) à travers laquelle l'eau du réservoir de stockage d'eau (1) est fournie au récipient de stockage d'eau (3), ledit récipient de stockage d'eau (3) présentant une forme telle que, lorsque la quantité d'eau qui y est contenue dépasse un niveau prédéterminé, son centre de gravité se déplace sur un côté de manière à faire pivoter ledit récipient de stockage (3), caractérisé en ce que
ladite tubulure d'alimentation d'eau (10) présente la forme d'un U inversé et dans laquelle est inséré un organe d'absorption d'eau (13) dont une extrémité est immergée dans l'eau du réservoir de stockage d'eau (1) pour aspirer de l'eau, et dont l'autre extrémité (17) est disposée au-dessus ou reliée audit récipient de stockage d'eau (3) pour l'alimentation en eau,
ladite tubulure d'alimentation d'eau en forme de U inversé est reliée à un flotteur (11) prévu dans ledit réservoir de stockage d'eau (1) et adapté pour se déplacer vers le haut et vers le bas dans le réservoir de stockage d'eau (1).
et en ce que le pot de fleurs (P) est muni d'un tube (14) dont au moins une extrémité est reliée à la partie inférieure dudit réservoir d'alimentation en eau (2),
ledit tube (14) étant pourvu d'un organe d'absorption d'eau (16) et d'une pluralité d'orifices d'alimentation en eau (15).

2. Dispositif d'arrosage pour l'arrosage d'un pot de fleurs selon la revendication 1, dans lequel la tubulure d'alimentation d'eau en forme de U inversé (10) glisse verticalement par rapport audit flotteur (11).

3. Dispositif d'arrosage pour l'arrosage d'un pot de fleurs selon l'une des revendications 1 ou 2, caractérisé en qu'il comprend en outre un plateau (7) disposé au-dessus dudit réservoir d'alimentation en eau (2) pour recueillir l'eau de pluie, ledit plateau (7) ayant un orifice (8) à travers lequel l'eau de pluie recueillie tombe dans ledit réservoir de stockage d'eau (1).

4. Dispositif d'arrosage pour l'arrosage d'un pot de fleurs selon l'une quelconque des revendications précédentes, dans lequel la tubulure d'alimentation d'eau (10) est pourvue de moyens d'étranglement (26) pour réguler le débit d'eau passant dans ladite tubulure d'alimentation en eau (10).
